# EUROPEAN PATENT APPLICATION

(11) **EP 4 336 612 A2**
(43) Date of publication of application: **13.03.2024**
(21) Application number: 23192400.2
(22) Date of filing: 21.08.2023
(51) Int. Cl.: H01M 10/04, H01M 10/0525, H01M 10/0587, H01M 50/46

(54) **METHOD OF MANUFACTURING BATTERY**

(30) Priority: 08.09.2022 JP 2022143306
(71) Applicant: Prime Planet Energy & Solutions, Inc., Chuo-ku Tokyo 103-0022 (JP)
(72) Inventor: ISEDA, Taisuke, Tokyo, 103-0022 (JP); NISHIDA, Akira, Tokyo, 103-0022 (JP); NIHOMMATSU, Koji, Tokyo, 103-0022 (JP)
(74) Representative: Kuhnen & Wacker Patent- und Rechtsanwaltsbüro PartG mbB

(57) **Abstract**

Provided is a technology which can produce a battery comprising a wound electrode assembly including separators having adhesive layers, with high productivity. In one suitable aspect of the method of manufacturing a battery as disclosed herein, the method comprises a first winding step of bringing a first separator and a second separator into contact with a winding core and winding the first separator and the second separator around the winding core; a second adhesive layer forming step of forming a second adhesive layer in the second separator; a first adhesive layer forming step of forming a first adhesive layer in the first separator; a second winding step of winding a positive electrode sheet and an negative electrode sheet around the winding core along with the first separator and the second separator; and a pressing step of pressing, after the second winding step, the first separator, the positive electrode sheet, the second separator, and the negative electrode sheet which have been wound.

## Description

### BACKGROUND OF THE DISCLOSURE

### 1. Technical Field

The present disclosure relates to a method of manufacturing a battery.

### 2. Description of Background

Japanese Patent No. 5328034 discloses a group of wound electrode bodies in which a separator is bonded to and integrated together with at least one of a positive electrode sheet and an negative electrode sheet via an adhesive resin included in the separator. It describes that the group of wound electrode bodies can be manufactured by a manufacturing method comprising the steps of forming the group of wound electrode bodies using the separator including the adhesive resin and performing hot pressing on the group of wound electrode bodies to integrate the separator with at least one of the positive electrode sheet and the negative electrode sheet. It is noted that Japanese Patent No. 5328034 does not provide any descriptions with regard to designs about a position at which the adhesive layer is formed and the amount of the adhesive layer formed in the separator.

### SUMMARY

Meanwhile, there is a need to develop a technology that can produce a battery comprising a wound electrode assembly including separators having adhesive layers, with high productivity.

Disclosed herein is a method of manufacturing a battery comprising a wound electrode assembly, the wound electrode assembly having a strip-shaped first separator, a strip-shaped positive electrode sheet, a strip-shaped second separator, and a strip-shaped negative electrode sheet wound around a winding axis in a predetermined winding direction, the positive electrode sheet being bonded with the first separator via a first adhesive layer, and the positive electrode sheet being bonded with the second separator via a second adhesive layer, the method comprising: a first winding step of bringing the first separator and the second separator into contact with a winding core and winding the first separator and the second separator around the winding core; and a second winding step of winding the positive electrode sheet and the negative electrode sheet around the winding core along with the first separator and the second separator, wherein the first separator has a first region in the vicinity of a winding initiation end of the first separator, and in the first region, there exists a region where the first adhesive layer is not formed and/or a region where the first adhesive layer is formed having a basis weight less than that of the first adhesive layer formed at a region facing the positive electrode sheet in the first separator, and wherein the second separator has a second region in the vicinity of a winding initiation end of the second separator, and in the second region, there exists a region where the second adhesive layer is not formed and/or a region where the second adhesive layer is formed having a basis weight less than that of the second adhesive layer formed at a region facing the positive electrode sheet in the second separator. According to the above method of manufacturing a battery, a battery comprising the wound electrode assembly including the separators having the adhesive layers can be obtained with high productivity.

### BRIEF DESCRIPTION OF THE DRAWINGS

FIG. 1 is a view showing a flow diagram illustrating a method of manufacturing a battery in accordance with an embodiment;
FIG. 2 is a view schematically showing a schematic diagram illustrating the configuration of an electrode assembly-manufacturing device in accordance with an embodiment;
FIG. 3A is an explanatory view showing a process of winding members around a winding core in accordance with an embodiment;
FIG. 3B is an explanatory view showing the process of winding the members around the winding core in accordance with the embodiment;
FIG. 3C is an explanatory view the process of winding the members around the winding core in accordance with the embodiment;
FIG. 3D is an explanatory view the process of winding the members around the winding core in accordance with the embodiment;
FIG. 4A is an explanatory view showing a pressing step;
FIG. 4B is an explanatory view showing the pressing step;
FIG. 5 is a perspective view schematically showing a battery in accordance with an embodiment;
FIG. 6 is a longitudinal sectional view schematically showing along the VI-VI line of FIG. 5;
FIG. 7 is a longitudinal sectional view schematically showing along the VII-VII line of FIG. 5;
FIG. 8 is a cross sectional view schematically showing along the VIII-VIII line of FIG. 5;
FIG. 9 is a perspective view showing electrode assemblies attached to a sealing plate;
FIG. 10 is a perspective view showing an electrode assembly to which a positive electrode second current collector and an negative electrode second current collector are attached;
FIG. 11 is a view schematically showing a configuration of a wound electrode assembly in accordance with an embodiment;
FIG. 12 is a view schematically showing a wound electrode assembly in its unfolded state in accordance with an embodiment;
FIG. 13 is an exploded view showing of FIG. 12; and
FIG. 14 is a longitudinal sectional view schematically showing along the XIV-XIV line of FIG. 10.

### DETAILED DESCRIPTION OF THE PREFERRED EMBODIMENTS

Below, some embodiments of the technology disclosed herein will be described with reference to the drawings. It is noted that matters other than those specifically mentioned herein that are required for the implementation of the technology disclosed herein (e.g., general configurations and manufacturing processes of batteries that are not characterized by the present disclosure) may be understood as matters of design by those skilled in the art based on the prior art in the field. The technology disclosed herein can be implemented based on the contents disclosed herein and the common technical knowledge in the field. It is noted that the following descriptions are not intended to limit the technology disclosed herein to these descriptions. It is also noted that the phrase "A to B" as used in this specification in the context of ranges shall encompass the meanings of "A or more and B or less" as well as "more than A" and "less than B."

It is noted that a "battery" as used in this specification is a term generally referring to a device of accumulating electricity from which electric energy can be retrieved, which is a concept encompassing a primary battery and a secondary battery. Further, a "secondary battery" as used in this specification generally refers to a device of accumulating electricity that can be repeatedly charged and discharged due to transferred charge carriers between a positive electrode sheet and an negative electrode sheet through an electrolyte. The electrolyte may be any of a liquid electrolyte (an electrolytic solution), a gelatinous electrolyte, and a solid electrolyte. Such secondary batteries include capacitors (physical cells) such as electric double layer capacitors in addition to so-called storage batteries (chemical cells) such as lithium-ion secondary batteries and nickel-hydrogen batteries. The following describes embodiments for lithium-ion secondary batteries. Further, in the following descriptions, an adhesive layer formed in a first separator 71 and an adhesive layer formed in a second separator 72 are referred to as a first adhesive layer 81 and a second adhesive layer 82, respectively.

### Method of manufacturing battery

First, the method of manufacturing a battery according to the present embodiment will be described. It is noted that in the method of manufacturing a battery as disclosed herein, the adhesive layer may be formed in a separator upon manufacturing the battery, or a separator having the adhesive layer pre-formed may be used. Below, the former will be described as an example.

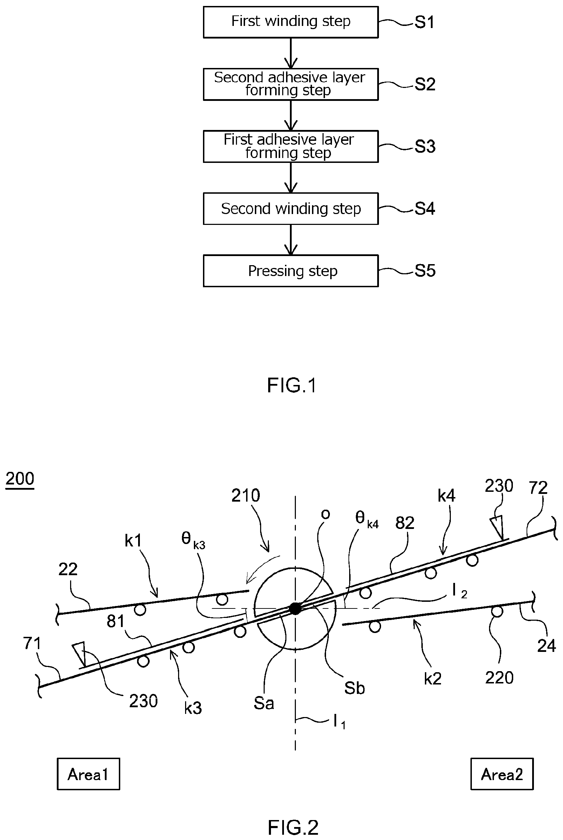

FIG. 1 shows a flow diagram illustrating the method of manufacturing a battery according to the present embodiment. As shown in FIG. 1, the method of manufacturing a battery according to the present embodiment comprises: a first winding step (a step S1) of bringing the first separator 71 and the second separator 72 into contact with a winding core 210 and winding the first separator 71 and the second separator 72 around the winding core 210; a second adhesive layer forming step (a step S2) of forming the second adhesive layer 82 on a surface of the second separator 72; a first adhesive layer forming step (a step S3) of forming the first adhesive layer 81 on a surface of the first separator 71; and a second winding step (a step S4) of winding a positive electrode sheet 22 and an negative electrode sheet 24 around the winding core 210 along with the first separator 71 and the second separator 72. A pressing step (a step S5) of pressing the first separator 71, the positive electrode sheet 22, the second separator 72, and the negative electrode sheet 24 which have been wound is further included after the second winding step (the step S4) in the present embodiment. It is noted that the method of manufacturing a battery as disclosed herein may further include an additional step at any stages which may be excluded as appropriate if that step is not specified as essential. Further, the order of the steps may be altered as long as the effects of the technology disclosed herein can be achieved. Below, the method of manufacturing a battery according to the present embodiment will be described with reference to an electrode assembly-manufacturing device 200 which can be used to embody the method of manufacturing a battery.

FIG. 2 shows a schematic diagram illustrating the configuration of the electrode assembly-manufacturing device 200 according to the present embodiment. The electrode assembly-manufacturing device 200 is a device for manufacturing a wound electrode assembly 20 having the strip-shaped first separator 71, the strip-shaped positive electrode sheet 22, the strip-shaped second separator 72, and the strip-shaped negative electrode sheet 24 wound around thereof, wherein the positive electrode sheet 22 adheres to the first separator 71 via the first adhesive layer 81, and the positive electrode sheet 22 adheres to the second separator 72 via the second adhere layer 82. As shown in FIG. 2, the electrode assembly-manufacturing device 200 comprises the winding core 210, a plurality of rollers 220, and a coating applicator 230. The electrode assembly-manufacturing device 200 also comprises a cutter, a pressing jig, and a controller, which are not shown. Here, the cutter is for cutting the first separator 71 and the second separator 72. The pressing jig is for pressing the first separator 71 and the second separator 72 against the winding core 210. Each component of the electrode assembly-manufacturing device 200 has a required actuator thereof as appropriate. The controller is configured to control each component of the electrode assembly-manufacturing device 200 so that required operations are performed at a predetermined timing according to a preset program. The controller can be embodied, for example, by a computer such as a microcontroller.

The positive electrode sheet 22, the negative electrode sheet 24, the first separator 71, and the second separator 72 are prepared in a state where they are each wound around a reel (not shown) and the like. The positive electrode sheet 22, the negative electrode sheet 24, the first separator 71, and the second separator 72 are transported along predetermined transport paths k1 to k4, respectively. The transport path k1 represents a pathway along which the positive electrode sheet 22 is fed towards the winding core 210 from a reel which is not shown. The transport path k2 represents a pathway along which the negative electrode sheet 24 is fed towards the winding core 210 from a reel which is not shown. The transport path k3 represents a pathway along which the first separator 71 is fed towards the winding core 210 from a reel which is not shown. The transport path k4 represents a pathway along which the second separator 72 is fed towards the winding core 210 from a reel which is not shown. In the transport paths k1 to k4, a dancer roll mechanism for removing looseness of the positive electrode sheet 22, the negative electrode sheet 24, the first separator 71, and the second separator 72 upon feeding; and a tensioner for adjusting tension may be provided in each path as appropriate.

The plurality of rollers 220 are arranged at the transport paths k1 to k4 for the positive electrode sheet 22, the negative electrode sheet 24, the first separator 71, and the second separator 72, respectively. The plurality of rollers 220 are examples of transport equipment. The plurality of rollers 220 are arranged at predetermined positions in order to define each of the transport pats k1 to k4. The positive electrode sheet 22, the negative electrode sheet 24, the first separator 71, and the second separator 72 are each fed by the plurality of rollers 220.

The winding core 210 serves to hold the first separator 71 and the second separator 72 to be wound around a side peripheral surface thereof. The winding core 210 is a substantially cylindrical member in this case, but a flattened winding core may be used when they will be wound into a flattened shape. In this case, a winding core segmentalized along a radial direction is used as the winding core 210, but a winding core which is not segmentalized may be used or a winding core having variable diameters may be used. The winding core 210 has a first slit Sa and a second slit Sb. In this case, the first slit Sa and the second slit Sb are positioned 180° apart along a direction of rotation of the winding core 210. By clamping a tip of the first separator 71 into the first slit Sa and a tip of the second separator 72 into the second slit Sb, each separator can be secured against the winding core 210.

The winding core 210 may further have a suction hole, a groove, and the like. The suction hole is a hole for forcing the first separator 71 and the second separator 72 wound around the side peripheral surface to be firmly attached to the winding core. The shape of the suction hole in a plane view may be circular or may be rectangular. Alternatively, the suction hole may be slit-shaped. Typically, the suction hole includes a suction flow path which is a flow path formed in the inside of the winding core 210 and in communication with the suction hole. The suction path is a flow path for forming negative pressure in the suction hole. For example, the suction path may be configured so as to be appropriately connected to a vacuum line installed outside in order to form negative pressure. The groove can serve as a receiving part into which a blade of the cutter is lowered when the first separator 71 and the second separator 72 are cut. This can suppress damages in the winding core or the cutter which may otherwise be caused by the contact of the blade of the cutter with the winding core 210.

The coating applicator 230 is a device for applying a binder liquid (an adhesive) to surfaces of the first separator 71 and the second separator 72 along a direction of transport. The coating applicator 230 is configured so that only a desired amount of the binder liquid can be applied on desired regions of the first separator 71 and the second separator 72. The binder liquid contains, for example, an adhesive layer binder as described below and a solvent. As the solvent of the binder liquid, a so-called aqueous solvent may be suitably used in view of reduced environmental impacts. In this case, a mixed solvent composed of water or mainly of water can be used. As solvent ingredients other than water which constitute such a mixed solvent, one or more organic solvents which can be mixed with water to homogeneity (low-level alcohol, low-level ketone, and the like) can be selected for use as appropriate. For example, an aqueous solvent may be preferably used in which 80 mass% or more (more preferably 90 mass% or more, further preferably 95 mass% or more) of the aqueous solvent is water. Particularly preferred examples include aqueous solvents consisting substantially of water. The solvent in the binder liquid is not be limited to the so-called aqueous solvent, but may be a so-called organic solvent system. Solvents for organic solvent systems include, for example, N-methylpyrrolidone and the like. For example, a suitable example of the binder liquid may be a system having water as a solvent and acrylic resin (for example, polymethacrylic acid ester resin) as a binder. It is noted that the binder liquid may contain one or more additives such as a known thickener and a known surfactant, for the purpose of improving wettability on the positive electrode sheet 22 and the separators and the like as long as the effects of the technology disclosed herein are not hindered.

As the coating applicator 230, for example, various types of intaglio printers such as ink jet printing, gravure roll coaters, and spray coaters; die coaters such as slit coaters, comma coaters, and cap coaters (Capillary Coaters); and various types of coating applicators such lip coaters and calender machines can be used.

As shown in FIG. 2, in the present embodiment, a formation area (see an Area 1 in FIG. 2) on which the first adhesive layer 81 is to be formed on a surface facing the positive electrode sheet 22 in the first separator 71 is provided in one side of a vertical line l₁ passing through a winding center O of the winding core 210 and extending in a vertical direction, and a formation area (see an Area 2 in FIG. 2) on which the second adhesive layer 82 is to be on a surface facing the positive electrode sheet 22 in the second separator 72 is provided in the other side of the vertical line l₁. These separately provided adhesive-layer formation regions are preferred because this enables a smaller space for the coating applicator. Further, the positive electrode sheet 22 is arranged above the first separator 71 in the Area 1, and the negative electrode sheet 24 is arranged below the second separator 72 in the Area 2.

Although not particularly limited, an angle θₖ₃ formed between a straight line l₂ passing through the winding center O of the winding core 210 and extending in a horizontal direction and the adhesive-layer formation region (in other words, the transport path k3) in the first separator 71 is preferably -30° to +30°, more preferably -15° to +15° in view of improving uneven application in a width direction of the first separator 71 and the like to facilitate formation of a more uniform adhesive layer. Also in a similar point of view, an angle θₖ₄ formed between the straight line l₂ passing through the winding center O of the winding core 210 and extending in the horizontal direction and the adhesive-layer formation region (in other words, the transport path k4) in the second separator 72 is preferably -30° to +30°, more preferably -15° to +15°. It is noted that, for example, θₖ₃ is set to about -30°, and θₖ₄ is set to +30° in the present embodiment.

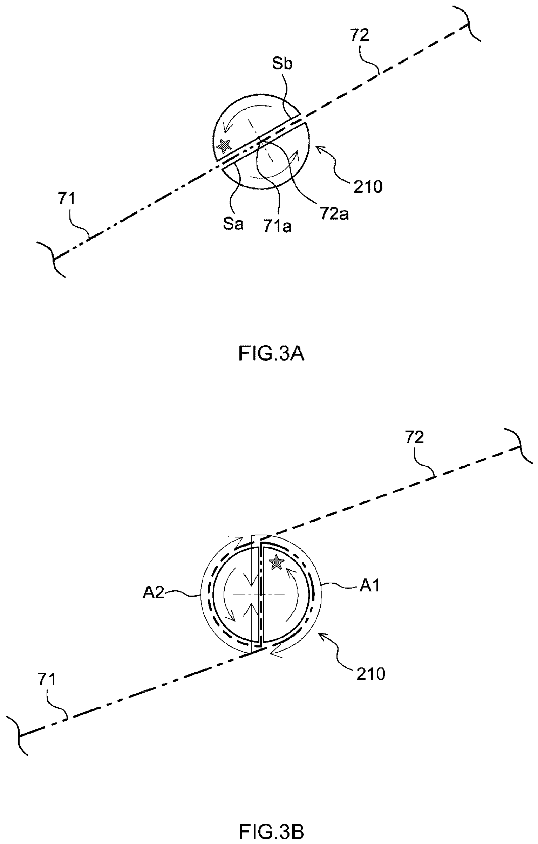

FIG. 3A to FIG. 3D shows diagrams for illustrating a process of winding the members round the winding core 210 according to the present embodiment. Here, the arrows in FIG. 3A to FIG. 3D indicate the directions of rotation of the winding core 210, but this is not intended to limit the directions of rotation of the winding core 210 to those directions. Further, the asterisks in the figures are given to facilitate understanding of the orientations of rotation of the winding core 210. Moreover, positive electrode tabs 22t and negative electrode tabs 24t are omitted in the figures for clarity.

First, as shown in FIG. 3A, the tip of the first separator 71 (in other words, a winding initiation end 71a of the first separator) is clamped into the first slit Sa, and the tip of the second separator 72 (in other words, a winding initiation end 72a of the second separator) is claimed into the second slit Sb. It is noted that in the present embodiment, the first slit Sa and the second slit Sb can serve as electrostatic chucks, and also fix the tip of the first separator 71 and the tip of the second separator 72 to the winding core 210. The above configuration is preferred because it can prevent formation of clamping marks and the like at the tip of the first separator 71 and the tip of the second separator 72.

Subsequently, as shown in FIG. 3B, the first separator 71 and the second separator 72 are brought into contact with the winding core 210 by rotating the winding core 210 approximately half a revolution in the direction of the arrows to wind the first separator 71 and the second separator 72 around the winding core 210 (the first winding step). As shown in FIG. 3B, the first separator 71 is brought into contact with the winding core 210 on a side wall of the first slit Sa and on an approximately half a revolution of a side surface of the winding core 210 (see a first contact region A1 in FIG. 3B) in the present embodiment. Further, the second separator 72 is brought into contact with the winding core 210 on a side wall of the second slit Sb and on an approximately half a revolution of the side surface of the winding core 210 (see a second contact region A1 in FIG. 3B).

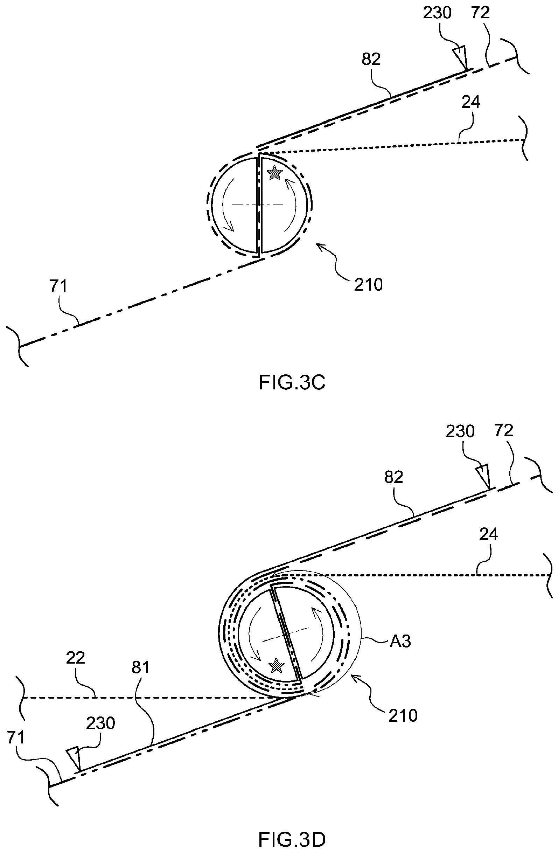

Next, as shown in FIG. 3C, the formation of the second adhesive layer 82 on the surface of the second separator 72 with the coating applicator 230 is started (the second adhesive layer forming step). Further, the negative electrode sheet 24 is sandwiched between the first separator 71 which is wound around the winding core 210 and the second separator 72 which is fed. Subsequently, as shown in FIG. 3D, the formation of the first adhesive layer 81 on the surface of the first separator 71 with the coating applicator 230 is started (the first adhesive layer forming step) after rotating the winding core 210 approximately half a revolution. Further, the positive electrode sheet 22 is sandwiched between the second separator 72 which is wound around the winding core 210 and the first separator 71 which is fed. The positive electrode sheet 22 and the negative electrode sheet 24 are then wound around the winding core 210 along with the first separator 71 and the second separator 72 by rotating the winding core 210 in the direction of the arrows (the second winding step). Each member is then wound round the winding core 210 until the predetermined number of windings are completed. In this way, a wound body 20a can be obtained in which the positive electrode sheet 22 and the first separator 71 are bonded via the first adhesive layer 81, and the positive electrode sheet 22 and the second separator 72 are bonded via the second adhesive layer 82.

As shown in FIG. 3C, in the present embodiment, the negative electrode sheet 24 is sandwiched at a timing when the first separator 71 and the second separator 72 are wound around the winding core 210 approximately half a revolution, but it is not limited to this. For example, in other embodiments, the negative electrode sheet 24 may be sandwiched at a timing when the first separator 71 is wound around the side wall of the first slit Sa and the winding core 210 approximately half a revolution, and the second separator 72 is wound around the side wall of the second slit Sb in view of preventing the adhesive layers from sticking to the winding core 210 as much as possible. Alternatively, in view of easy withdrawal of the wound body 20a from the winding core 210 and the like, the negative electrode sheet 24 may be sandwiched at a timing when the first separator 71 is wound around the side wall of the first slit Sa and the winding core 210 by approximately one revolution, and the second separator 72 is wound around the side wall of the second slit Sb and the winding core 210 by approximate one revolution. However, these are merely examples, and the timing of sandwiching the negative electrode sheet 24 can be adjusted according to the type of the wound electrode assembly to be manufactured, and the like.

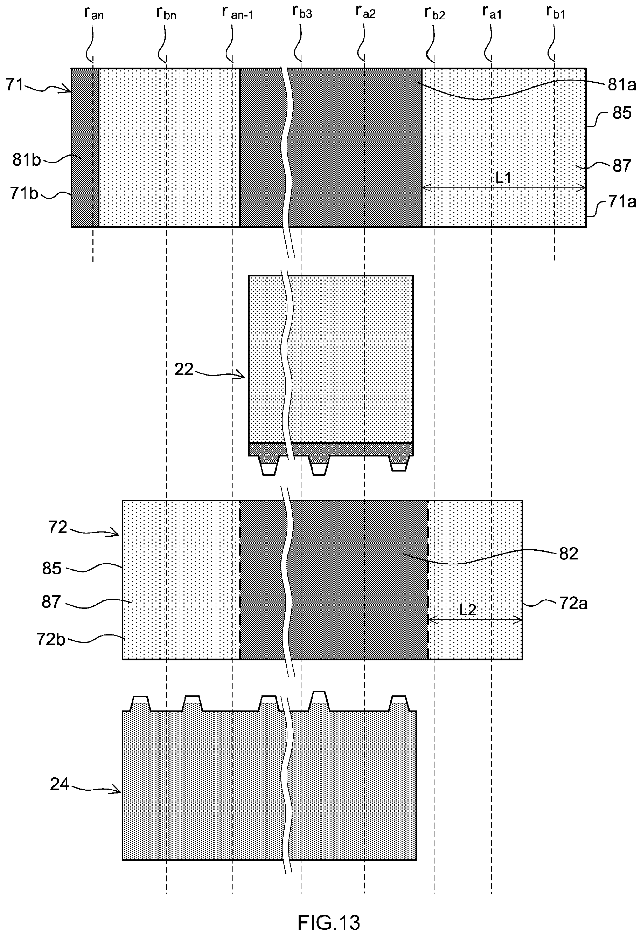

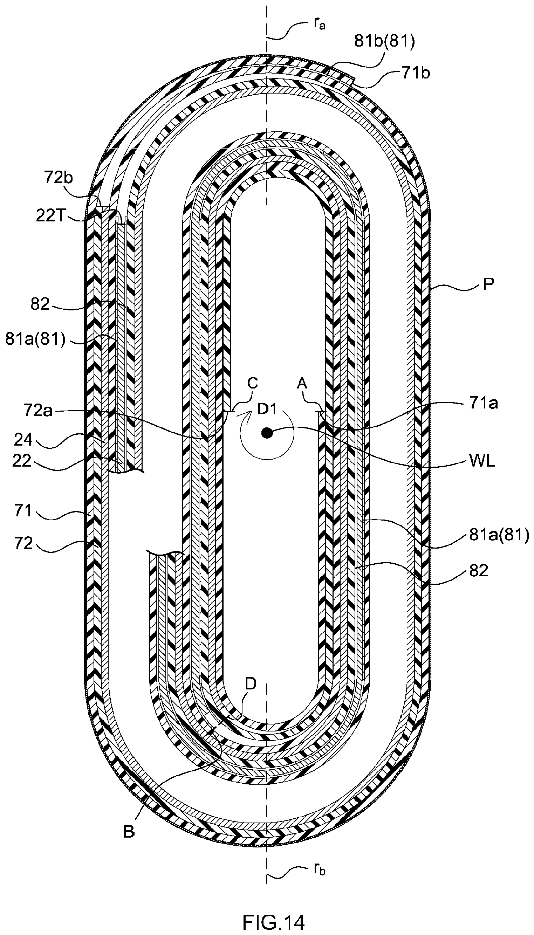

Although not particularly limited, a starting position of forming the first adhesive layer 81 in the first separator 71 at the first adhesive layer forming step may be the same as a position where the positive electrode sheet 22 is sandwiched, or may be a position closer to the winding initiation end 71a of the first separator than the position where the positive electrode sheet 22 is sandwiched (for example, at a position 10 mm or 20 mm to the winding initiation end 71a of the first separator). Further, a starting position of forming the second adhesive layer 82 in the second separator 72 at the second adhesive layer forming step may be the same as a position where the negative electrode sheet 24 is sandwiched, or may be a position closer to the winding initiation end 72a of the second separator than the position where the negative electrode sheet 24 is sandwiched (for example, at a position 10 mm or 20 mm to the winding initiation end 72a of the second separator). For example, in the latter case, it is preferred because the adhesive layers can be more reliably formed at regions facing the positive electrode sheet 22 in the first separator 71 and the second separator 72. It is noted that at the first adhesive layer forming step in the present embodiment, the starting position of forming the first adhesive layer 81 in the first separator 71 is closer to the winding initiation end 71a of the first separator than the position where the positive electrode sheet 22 is sandwiched. Further, at the second adhesive layer forming step, the starting position of forming the second adhesive layer 82 on the second separator 72 is closer to the winding initiation end 72a of the second separator than the position where the negative electrode sheet 24 is sandwiched (see FIG. 13 and FIG. 14).

Although not particularly limited, a termination position of forming the first adhesive layer 81 in the first separator 71 may be a position facing a winding termination end 22T of the positive electrode sheet in the first separator 71, or a position closer to a winding termination end 71b of the first separator than the position facing the winding termination end 22T of the positive electrode sheet in the first separator 71 (for example, a position 10 mm or 20 mm to the winding termination end 71b of the first separator). Further, a termination position of forming the second adhesive layer 82 in the second separator 72 may be a position facing a winding termination end 22T of the positive electrode sheet in the second separator 72, or a position closer to a winding termination end 72b of the second separator than the position facing the winding termination end 22T of the positive electrode sheet in the second separator 72 (for example, a position 10 mm or 20 mm to the winding termination end 72b of the second separator). For example, in the latter case, it is preferred because the adhesive layers can be more reliably formed at the regions facing the positive electrode sheets 22 in the first separator 71 and the second separator 72. It is noted that in the present embodiment, the termination position of forming the first adhesive layer 81 (in this case, a first adhesive layer 81a) in the first separator 71 is set to be closer to the winding termination end 71b of the first separator than the position facing the winding termination end 22T of the positive electrode sheet in the first separator 71. Further, the termination position of forming the second adhesive layer 82 in the second separator 72 is closer to the winding termination end 72b of the second separator than the position facing the winding termination end 22T of the positive electrode sheet in the second separator 72 (see FIG. 13 and FIG. 14). Further, in the present embodiment, a first adhesive layer 81b is formed in the vicinity of the winding termination end 71b in the first separator. Moreover, the second adhesive layer 82 is not formed on an outermost surface in the second separator 72 (see FIG. 13 and FIG. 14).

According to the method of manufacturing a battery as disclosed herein, the wound electrode assembly 20 can be obtained in which the strip-shaped first separator 71, the strip-shaped positive electrode sheet 22, the strip-shaped second separator 72, and the strip-shaped negative electrode sheet 24 are wound around a winding axis WL in a predetermined direction of winding. Among these, the positive electrode sheet 22 and the first separator 71 are bonded via the first adhesive layer 81. The positive electrode sheet 22 and the second separator 72 are bonded via the second adhesive layer 82. The first separator 71 has a first region in the vicinity of the winding initiation end 71a of the first separator. In the first region, there exists a region where the first adhesive layer 81 is not formed and/or a region where the first adhesive layer 81 is formed having a basis weight less than that of the first adhesive layer 81 formed at a region facing the positive electrode sheet 22 in the first separator 71. The second separator 72 has a second region in the vicinity of the winding initiation end 72a of the second separator. In the second region, there exists a region where the second adhesive layer 82 is not formed and/or a region where the second adhesive layer 82 is formed having a basis weight less than that of the second adhesive layer 82 formed at a region facing the positive electrode sheet 22 in the second separator 72.

That is, according to the manufacturing method as disclosed herein, a battery 100 comprising the wound electrode assembly 20 as described above can be obtained. In the wound electrode assembly 20 disclosed herein, the first adhesive layer 81 may not be formed throughout the entire first region, or the first adhesive layer 81 may be formed throughout the entire first region. Alternatively, in the first region, there may exist the region where the first adhesive layer 81 is not formed and a region where the first adhesive layer 81 is formed. In the wound electrode assembly 20 as disclosed herein, the second adhesive layer 82 may not be formed throughout the entire second region, or the second adhesive layer 82 may be formed throughout the entire second region. Alternatively, in the second region, there may exist the region where the second adhesive layer 82 is not formed and a region where the second adhesive layer 82 is formed.

It is noted that "the first region in the vicinity of the winding initiation end of the first separator" may be a region up to, for example, 50%, 100%, 120%, 150%, 200% from the winding initiation end 71a of the first separator when the length of the innermost circumference of the winding core 210 is 100%. Alternatively, it may be a region up to, for example, 50%, 100%, 120%, 150%, 200% from the winding initiation end 71a of the first separator when the length of the innermost circumference of the wound electrode assembly 20 is 100%. For example, in the present embodiment, the vicinity of the winding initiation end 71a of the first separator is defined as a region within 2 cm from the winding initiation end 71a of the first separator. Further, "the second region in the vicinity of the winding initiation end of the second separator" may be a region up to, for example, 50%, 60%, 80%, 100%, 120%, 150%, 200% from the winding initiation end 72a of the second separator when the length of the innermost circumference of the winding core 210 is 100%. Alternatively, it may be a region up to, for example, 50%, 60%, 80%, 100%, 120%, 150%, 200% from the winding initiation end 72a of the second separator when the length of the innermost circumference of the wound electrode assembly 20 is 100%. For example, in the present embodiment, the vicinity of the winding initiation end 72a of the second separator is defined as a region within 2 cm from the winding initiation end 72a of the second separator. However, it is not limited to these. Moreover, a "basis weight" (the amount of basis weight) means a value calculated by dividing the mass of an adhesive layer by the area of a formed region (mass of adhesive layer/area of formed region).

It is noted that in the wound electrode assembly 20 according to the present embodiment, the region where the first adhesive layer 81 is not formed is present in the first region (in this case, the first contact region A1 and a region A3) in the vicinity of the winding initiation end 71a of the first separator. Further, the region where the second adhesive layer 82 is not formed is present in the second region (in this case, the second contact region A2) in the vicinity of the winding initiation end 72a of the second separator (see FIG. 14).

Moreover, the battery 100 comprising the wound electrode assembly 20 as described above includes the wound electrode assembly 20 in which the strip-shaped first separator 71, the strip-shaped positive electrode sheet 22, the strip-shaped second separator 72, and the strip-shaped negative electrode sheet 24 are wound around the winding axis WL in the predetermined direction of winding. The positive electrode sheet 22 and the first separator 71 are bonded via the first adhesive layer 81 in the wound electrode assembly 20. Further, the positive electrode sheet 22 and the second separator 72 are bonded via the second adhesive layer 82. The method of manufacturing a battery as described above comprises: the first adhesive layer forming step, the second adhesive layer forming step, the first winding step, and the second winding step. Here, the first adhesive layer forming step is a step of forming the first adhesive layer 81 on the surface of the first separator 71. The second adhesive layer forming step is a step of forming the second adhesive layer 82 on the surface of the second separator 72. The first winding step is a step of bringing the first separator 71 and the second separator 72 into contact with the winding core 210, and winding the first separator 71 and the second separator 72 around the winding core 210. The second winding step is a step of winding the positive electrode sheet 22 and the negative electrode sheet 24 around the winding core 210 along with the first separator 71 and the second separator 72. At the first adhesive layer forming step, the first adhesive layer 81 having a predetermined basis weight is formed at the region facing the positive electrode sheet 22, and the region where the first adhesive layer 81 is not formed and/or the region where the first adhesive layer 81 is formed having a basis weight less than that of the region facing the positive electrode sheet 22 in the first separator 71 are formed in a predetermined first region in the vicinity of the winding initiation end 71a of the first separator. At the second adhesive layer forming step, the second adhesive layer 82 having a predetermined basis weight is formed at the region facing the positive electrode sheet 22, and the region where the second adhesive layer 82 is not formed and/or the region where the second adhesive layer 82 is formed having a basis weight less than that of the region facing the positive electrode sheet 22 in the second separator 72 are formed in a predetermined second region in the vicinity of the winding initiation end 72a of the second separator.

That is, in the manufacturing method disclosed here, the first adhesive layer 81 may be formed throughout the entire first region, or the first adhesive layer 81 may not be formed throughout the entire first region. Alternatively, the region where the first adhesive layer 81 is not formed and the region where the first adhesive layer 81 is formed may be formed in the first region. Further, in the method of manufacturing a battery as disclosed herein, the second adhesive layer 82 may be formed throughout the entire second region, or the second adhesive layer 82 may be formed throughout the entire second region. Alternatively, the region where the second adhesive layer 82 is not formed and the region where the second adhesive layer 82 is formed may be formed in the second region.

According to the method of manufacturing a battery of such a configuration, no adhesive layers are formed in the vicinity of the winding initiation end of either the first separator 71 or the second separator 72, or the adhesive layers to be formed have a lower basis weight. This can suitably reduce the amount of the adhesive layers adhering to the winding core 210. Accordingly, the amount of the adhesive layers would be small even if the adhesive layers do adhere to the winding core 210. This, in turn, can prevent inhibition of continuous production of the wound electrode bodies 20 due to the adhesive layers adhering to the winding core 210, and can suitably suppress a decreased yield of the wound electrode bodies 20. By this, the battery 100 comprising the wound electrode assembly 20 can be obtained with high productivity, the wound electrode assembly 20 including the separators having adhesive layers.

Although not particularly limited, when the first adhesive layer 81 is formed in the first region at the first adhesive layer forming step, the ratio (B/A) of a basis weight B of the first adhesive layer 81 in the first region to a basis weight A of the first adhesive layer 81 in the region facing the positive electrode sheet 22 may be, for example, 0.9 or less, and in view of suitably controlling the amount of the first adhesive layer 81 that may adhere to the winding core 210, it may be preferably 0.8 or less, more preferably 0.5 or less, particularly preferably 0.3 or less, and for example, it may be 0.1 or less.

Although not particularly limited, when the second adhesive layer 82 is formed in the second region at the second adhesive layer forming step, the ratio (D/C) of a basis weight D of the second adhesive layer 82 in the second region to a basis weight C of the second adhesive layer 82 in the region facing the positive electrode sheet 22 may be, for example, 0.9 or less, and in view of suitably controlling the amount of the second adhesive layer 82 that may adhere to the winding core 210, it may be preferably 0.8 or less, more preferably 0.5 or less, particularly preferably 0.3 or less, and for example, it may be 0.1 or less

It is noted that in the present embodiment, at the first adhesive layer forming step, the first adhesive layer 81 having a predetermined basis weight is formed in the region facing the positive electrode sheet 22, and the region where the first adhesive layer 81 is not formed is formed in the first region predetermined in the vicinity of the winding initiation end 71a of the first separator (in this case, the first contact region A1 and the region A3). Further, at the second adhesive layer forming step, the second adhesive layer 82 having a predetermined basis weight is formed in the region facing the positive electrode sheet 22, and the region where the second adhesive layer 82 is not formed is formed in the second region predetermined in the vicinity of the winding initiation end 72a of the second separator (in this case, the second contact region A2).

As in the present embodiment, it is also preferred that the adhesive layer forming steps (in this case, the first adhesive layer forming step and the second adhesive layer forming step) and the winding steps (in this case, the first winding step and the second winding step) are performed successively. By performing these steps successively, blocking (e.g., unintended adhesion between the adhesive layers and the separators) can be suitably suppressed when the separators are unrolled from the reels. This is because after the adhesive layer forming steps, the separators do not need to be kept in a state where they are wound around the reels. This is preferred because the wound electrode bodies having the desired amount of adhesive layers formed in desired positions can be more reliably obtained. In this case, a distance between a position where the adhesive layer is formed (in this case, a position where the coating applicator 230 is present) and a position of the winding core 210 may be, for example, less than 50 m, and may be less than 10 m or less than 3 m.. Moreover, a period of time between the completion of the adhesive layer forming steps and the start of the winding steps may be, for example, less than 60 minutes, less than 20 minutes, or less than 5 minutes. It is noted that the distances and the period of time as described above may be altered as appropriate depending on actual embodiments.

In the method of manufacturing a battery as disclosed herein, a region where the first adhesive layer 81 is not formed in the first contact region (in this case, the first contact region A1) in contact with the winding core 210 in the first separator 71 and/or a region where the first adhesive layer 81 is formed having a basis weight less than that of the first adhesive layer 81 formed at the region facing the positive electrode sheet 22 in the first separator 71 may be formed at the first winding step. Further, in the method of manufacturing a battery as disclosed herein, a region where the second adhesive layer 82 is not formed in the second contact region (in this case, the second contact region A2) in contact with the winding core 210 in the second separator 72 and/or a region where the second adhesive layer 82 is formed having a basis weight less than that of the second adhesive layer 82 formed at the region facing the positive electrode sheet 22 in the second separator 72 may be formed at the first winding step.

That is, in the method of manufacturing a battery as disclosed herein, the first adhesive layer 81 may not be formed throughout the entire first contact region, or the first adhesive layer 81 may be formed throughout the entire first contact region. Alternatively, the region where the first adhesive layer 81 is formed and the region where the first adhesive layer 81 is not formed may be formed in the first contact region. Further, in the method of manufacturing a battery as disclosed herein, the second adhesive layer 82 may not be formed throughout the entire second contact region, or the second adhesive layer 82 may be formed throughout the entire second contact region. Alternatively, the region where the second adhesive layer 82 is formed and the region where the second adhesive layer 82 is not formed may be formed in the second contact region.

According to the method of manufacturing a battery of such a configuration, no adhesive layers are formed in regions in contact with the winding core 210 either in the first separator 71 or the second separator 72, or the adhesive layers to be formed have a lower basis weight. This can suitably suppress the amount of the adhesive layers adhering to the winding core 210. Accordingly, the amount of the adhesive layers would be small even if the adhesive layers do adhere to the winding core 210. This, in turn, can prevent inhibition of continuous production of the wound electrode bodies 20 due to the adhesive layers adhering to the winding core 210, and can more suitably suppress a decreased yield of the wound electrode bodies 20. By this, the battery 100 comprising the wound electrode assembly 20 can be obtained with high productivity, the wound electrode assembly 20 including the separators having adhesive layers.

Although not particularly limited, when the first adhesive layer 81 is formed in the first contact region, the ratio (F/E) of a basis weight F of the first adhesive layer 81 in the first contact region to a basis weight E of the first adhesive layer 81 in the region facing the positive electrode sheet 22 may be, for example, 0.9 or less, and in view of suitably controlling the amount of the first adhesive layer 81 that may adhere to the winding core 210, it may be preferably 0.8 or less, more preferably 0.5 or less, particularly preferably 0.3 or less, and for example, it may be 0.1 or less.

Although not particularly limited, when the second adhesive layer 82 is formed in the second contact region, the ratio (H/G) of a basis weight H of the second adhesive layer 82 in the second contact region to a basis weight G of the second adhesive layer 82 in the region facing the positive electrode sheet 22 may be, for example, 0.9 or less, and in view of suitably controlling the amount of the second adhesive layer 82 that may adhere to the winding core 210, it may be preferably 0.8 or less, more preferably 0.5 or less, particularly preferably 0.3 or less, and for example, it may be 0.1 or less.

It is noted that in the present embodiment, a region where the first adhesive layer 81 is not formed throughout the entire first contact region A1 is formed, and a region where the second adhesive layer 82 is not formed throughout the entire second contact region A2 is formed.

Further, as shown in FIG. 3C and FIG. 3D, in the present embodiment, a timing of starting adhesive application on the first separator 71 is delayed by half a revolution than a timing of starting adhesive application on the second separator 72. That is, in the present embodiment, a region extending to a region other than the first contact region A1 in which the region where the first adhesive layer 81 is not formed (see the region A3 in FIG. 3D) is formed in the first separator 71. The region A3 in this case represents a region where the second separator 72 is positioned between the first separator 71 and the winding core 210.

That is, in the method of manufacturing a battery as disclosed herein, the first region may be formed so as to extend to a region other than the first contact region (in this case, the first contact region A1) in the first separator 71. According to the method of manufacturing a battery of such a configuration, excessive formation of the first adhesive layer 81 in the first separator 71 can be suppressed. This can suppress increased resistance of the battery 100 and decreased impregnation of the wound electrode assembly 20. Therefore, this is preferred.

It is noted that in the present embodiment, the region extending to a region other than the first contact region A1 in which the region where the first adhesive layer 81 is not formed (see the region A3 in FIG. 3D) is formed in the first separator 71.

In the method of manufacturing a battery as disclosed herein, the first region and the second region may be formed so that a length L1 from the winding initiation end 71a of the first separator in a longitudinal direction of the first region is longer than a length L2 from the winding initiation end 72a of the second separator in a longitudinal direction of the second region. According to the method of manufacturing a battery of such a configuration, excessive formation of the adhesive layers in the separators can be suppressed. This can suppress increased resistance of the battery 100 and decreased impregnation of the wound electrode assembly 20. Therefore, this is preferred.

It is noted that in the present embodiment, the first region and the second regions are formed so that the length L1 from the winding initiation end 71a of the first separator in the longitudinal direction of the first region (in this case, the first contact region A1 and the region A3) is longer than the length L2 from the winding initiation end 72a of the second separator in the longitudinal direction of the second region (in this case, the second contact region A2) (see FIG. 13).

Although not particularly limited, the ratio (L1/L2) of the length L1 from the winding initiation end 71a of the first separator in the longitudinal direction of the first region to the length L2 from the winding initiation end 72a of the second separator in the longitudinal direction of the second region may be, for example, 1.2 or more, and in view of easier achievement of the aforementioned effects, it may be preferably 1.5 or more, or 2 or more. Further, the upper limit of the above ratio (L1/L2) may be, for example, 3 or less, or 2.5 or less.

In the method of manufacturing a battery as disclosed herein, a region where a corresponding adhesive layer (i.e., the first adhesive layer 81 and/or the second adhesive layer 82) is not formed, and/or a region where a corresponding adhesive layer is formed having a basis weight less than that of a corresponding adhesive layer formed at a region facing the positive electrode sheet 22 in a corresponding separator may be formed in an region corresponding to the outermost surface of the wound electrode assembly 20 in the first separator 71 and the second separator 72. That is, in the method of manufacturing a battery as disclosed herein, the corresponding adhesive layer may not be formed throughout the entire region corresponding to the outermost surface of the wound electrode assembly 20, or the corresponding adhesive layer may be formed throughout the entire region corresponding the outermost surface of the wound electrode assembly 20. Alternatively, a region where the corresponding adhesive layer is formed and a region where the corresponding adhesive layer is not formed may be formed in the region corresponding to the outermost surface of the wound electrode assembly 20. According to the method of manufacturing a battery of such a configuration, adhesion of the adhesive layers to the electrode assembly-manufacturing device 200 can be suitably prevented, and thus the productivity of the battery 100 comprising the wound electrode assembly 20 including the adhesive layers can be more suitably improved.

Although not particularly limited, when the corresponding adhesive layer is formed in the region corresponding to the outermost surface of the wound electrode assembly 20, the ratio (J/I) of a basis weight J of the corresponding adhesive layer in the region corresponding to the outermost surface of the wound electrode assembly 20 to a basis weight I of the corresponding adhesive layer in the region facing the positive electrode sheet 22 may be, for example, 0.9 or less, 0.8 or less, 0.5 or less, 0.3 or less, or 0.1 or less.

It is noted that in the present embodiment, the region where the first adhesive layer 81 is not formed is formed in the region corresponding to the outermost surface of the wound electrode assembly 20 in the first separator 71 (see P in FIG. 14).

Further, in the present embodiment, the first adhesive layer 81b having a basis weight less than that of the first adhesive layer 81a in the region facing the positive electrode sheet 22 is formed in the vicinity of the winding termination end 71b of the first separator on a surface of a side where the first adhesive layer 81 is formed (see FIG 14). According to the method of manufacturing a battery of such a configuration, there is no need to provide a winding end-fixing tape around the winding termination end 71b of the first separator. This is preferred in view of simplifying production of the battery. Further, in the present embodiment, the second adhesive layer 82 is not formed on the outermost surface in the second separator 72. It is noted that the "vicinity of the winding termination end of the first separator" may be a region within, for example, 5%, 10%, or 20% from the winding termination end 71b of the first separator when the length of the outermost circumference of the wound electrode assembly 20a is 100%. Alternatively, it may be a region up to 5%, within 10%, or within 20% from the winding termination end 71b of the first separator when the length of the outermost circumference of the wound electrode assembly 20 is 100%. For example, in the present embodiment, the vicinity of the winding termination end 71b of the first separator is defined as a region within 2 cm from the winding termination end 71b of the first separator.

As shown in FIG. 2, the first separator 71 is fed to the winding core 210 from one side of the vertical line li, and the second separator 72 is fed to the winding core 210 from the other side of the vertical line l₁ at the first winding step. According to such a configuration, a position of the winding termination end 71a of the first separator, a position of the winding termination end 72a of the second separator, the length of each separator, and a cutting position can be suitably adjusted. Further, at the second winding step, the positive electrode sheet 22 is fed to the winding core 210 from the same side as the first separator 71 with respect to the vertical line li, and the negative electrode sheet 24 is fed to the winding core 210 from the other side of the second separator with respect to the vertical line l₁. The first separator 71 is then fed from above the positive electrode sheet 22, and the second separator 72 is fed from below the negative electrode sheet 24.

In the method of manufacturing a battery as disclosed herein, the first adhesive layer 81 is preferably formed in the first separator 71 when passing a region where the angle θₖ₃ between the transport path k3 and the straight line l₂ passing through the winding center O of the winding core 210 and extending in the horizontal direction is, for example, -30° to +30° (preferably, -15° to +15°). Further, the second adhesive layer 82 is preferably formed in the first separator 72 when passing a region where the angle θₖ₄ between the transport path k4 and the straight line l₂ passing through the winding center O of the winding core 210 and extending in the horizontal direction is, for example, -30° to +30° (preferably, -15° to +15°). This can ameliorate uneven application in the width direction of the separators, leading to formation of more uniform adhesive layers.

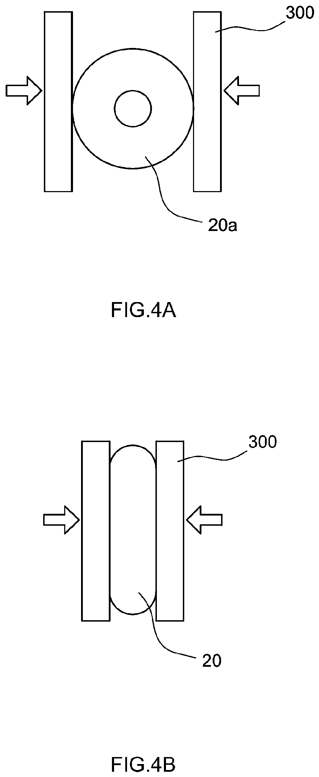

In the present embodiment, after the second winding step, the first separator 71, the positive electrode sheet 22, the second separator 72, and the negative electrode sheet 24 which have been wound are further pressed (the pressing step). Here, FIG. 4A and FIG. 4B illustrate the pressing step. In the pressing step, the wound body 20a manufactured as described above is withdrawn from the winding core 210 and pressed with a press machine 300. By this, the wound electrode assembly 20 in a flattened shape can be suitably obtained. It is also preferred that pressing is performed so that an adhesive strength of the positive electrode sheet 22 and the first separator 71 after the pressing step is greater than that of the positive electrode sheet 22 and the first separator 71 before the pressing step. It is noted that pressing is preferably performed so that the adhesive strength between the positive electrode sheet 22 and the second separator 72 after the pressing step is also greater than that between the positive electrode sheet 22 and the second separator 72 before the pressing step. The method of manufacturing a battery of such a configuration, an opportunity to loosen the wound body 20a after winding can be given in order to suppress buckling. Therefore, this is preferred.

Although not particularly limited, the ratio (N/M) of an adhesive strength M of the positive electrode sheet 22 and the first separator 71 before the pressing step to an adhesive strength N of the positive electrode sheet 22 and the first separator 71 after the pressing step may be, for example, 1.2 or more, 1.5 or more, or 2 or more. It is noted that such an adhesion strength may mean, for example, an adhesion strength measured by a conventionally known measurement method using a positive electrode sheet-separator laminated body of a predetermined area (e.g., a sample in 5 cm x 5 cm). The ratio of the adhesion strength of the positive electrode sheet 22 and the second separator 72 before the pressing step to the adhesion strength of the positive electrode sheet 22 and the second separator 72 after the pressing step can also be referred to the above description.

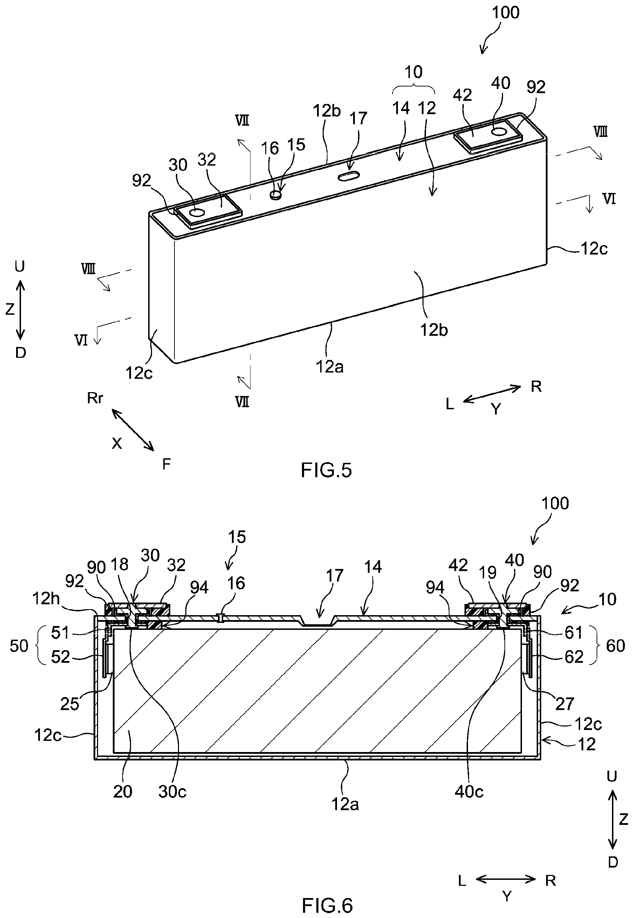

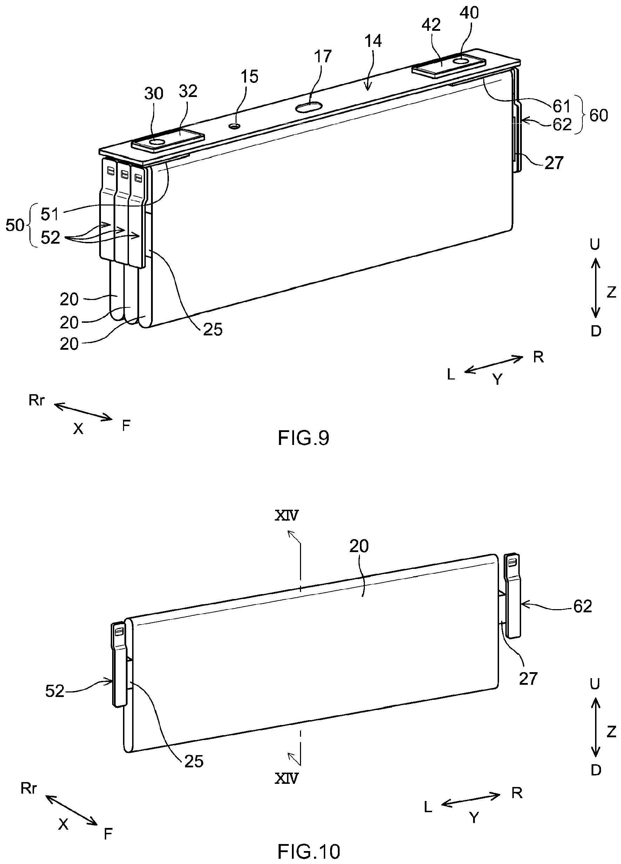

The battery 100 can be made by preparing three of the wound electrode bodies 20, and inserting them into a battery case 10, and sealing it. Specifically, as shown in FIG. 6, a positive electrode second current collecting member 52 is joined to a positive electrode tab group 25 of the wound electrode assembly 20, and an negative electrode second current collecting member 62 is joined to an negative electrode tab group 27. Then, as shown in FIG. 9, a plurality (in this case, three) of wound electrode bodies are arranged so that flattened portions are facing each other. A sealing plate 14 is placed above the plurality of wound electrode bodies 20, and the positive electrode tab group 25 of each of the wound electrode bodies 20 is bent so that the positive electrode second current collecting member 52 and one side surface 20e of the wound electrode assembly 20 are facing each other. This connects a positive electrode first current collecting member 51 with the positive electrode second current collecting member 52. Similarly, the negative electrode tab group 27 of each of the wound electrode bodies 20 is bent so that the negative electrode second current collecting member 62 and the other side 20h of the wound electrode assembly 20 are facing each other. This connects an negative electrode first current collecting member 61 with the negative electrode second current collecting member 62. As a result, the wound electrode bodies 20 are attached to the sealing plate 14 via a positive electrode current collector 50 and an negative electrode current collector 60. Subsequently, the wound electrode bodies 20 attached to the sealing plate 14 is covered with an electrode assembly holder 29 (see FIG. 3), and then housed in the inside of an exterior body 12. As a result, flattened portions of the wound electrode bodies 20 face a long side wall 12b of the exterior body 12 (i.e., a flattened surface of the battery case 10). Further, an upper curved portion 20r faces the sealing plate 14 and a lower curved portion 20r faces a bottom wall 12a of the exterior body 12. After sealing an opening 12h on a top surface of the exterior body 12 with the sealing plate 14, the battery case 10 is then constructed by joining (welding) the exterior body 12 with the sealing plate 14. After this, an electrolyte is injected into the battery case 10 through an injection hole 15 in the sealing plate 14, and the injection hole 15 is then sealed with a sealing member 16. As described above, the battery 100 can be manufactured.

### Configuration of battery

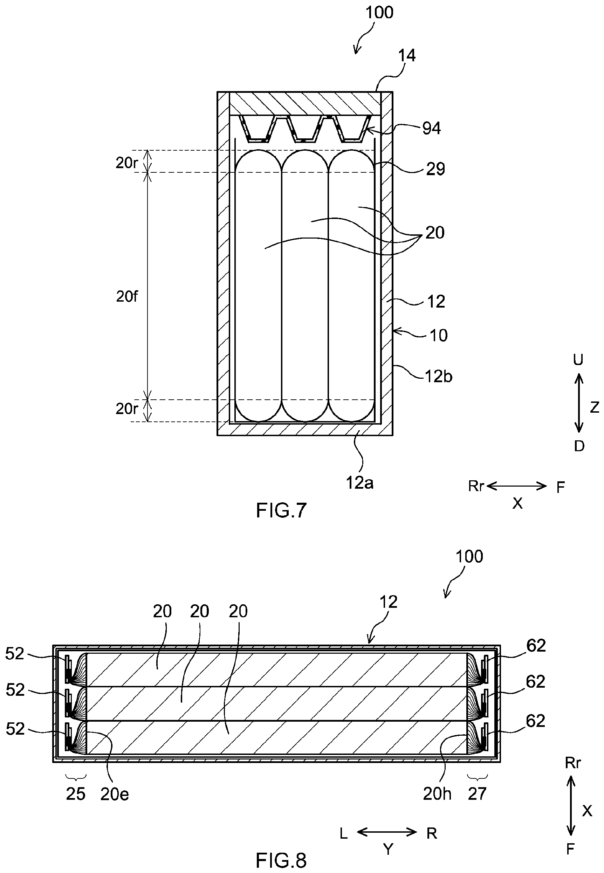

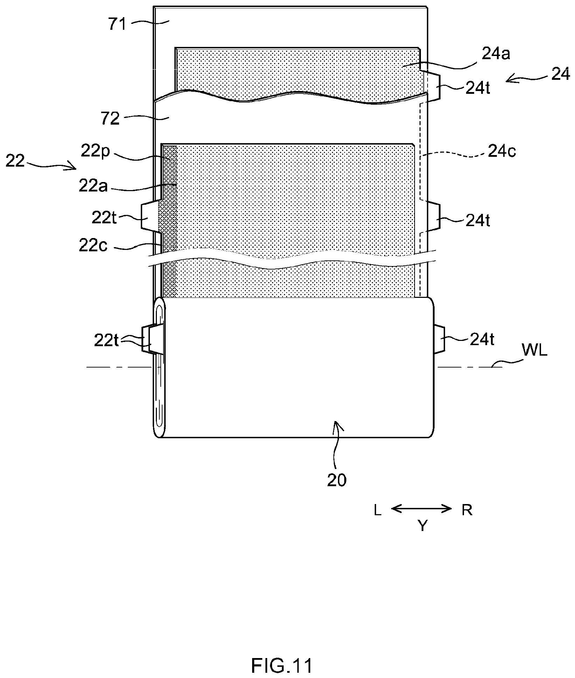

Below, the battery 100 manufactured by the method of manufacturing a battery as disclosed herein will be described with reference to FIG. 5 to FIG. 11. FIG. 5 shows a perspective view of the battery 100. FIG. 6 shows a schematic longitudinal sectional view along the VI-VI line in FIG. 5. FIG. 7 shows a schematic longitudinal sectional view along the VII-VII line in FIG. 5. FIG. 8 shows a schematic cross sectional view along the VIII-VIII line in FIG. 5. FIG. 9 shows a perspective view schematically illustrating electrode bodies attached to the sealing plate. FIG. 10 shows a perspective view schematically illustrating an electrode assembly to which the positive electrode second current collector and the negative electrode second current collector are attached. FIG. 11 shows the structure of the wound electrode assembly. It is noted that in FIG. 11, illustration of the first adhesive layer 81 and the second adhesive layer 82 is omitted for clarity.

As shown in FIG. 5 and FIG. 6, the battery 100 comprises the wound electrode assembly 20 and the battery case that houses the wound electrode assembly 20. Although not shown in the figures, the battery 100 further comprises an electrolyte, here. The battery 100 is preferably a non-aqueous electrolyte secondary battery, for example, a lithium ion secondary battery and the like.

The battery case 10 is a housing which houses the wound electrode assembly 20. In this case, the battery case 10 has a bottomed rectangular (square) outer shape, as shown in FIG. 5. The material of the battery case 10 may be the same as conventionally used, without any particular restrictions. The battery case 10 is preferably made of a metal. Examples of materials which can be used for the battery case 10 include aluminum, aluminum alloys, iron, iron alloys, and the like.

As shown in FIG. 5 and FIG. 6, the battery case 10 comprises the exterior body 12 and the sealing plate 14. The exterior body 12 is a flat-bottomed square container having an opening 12h at the top surface. The exterior body 12 comprises a substantially rectangular bottom wall 12a in a plan view, a pair of longer side walls 12b extending from the bottom wall 12a and facing each other, and a pair of shorter side walls 12c extending from the bottom wall 12a and facing each other. The area of the shorter side wall 12c is smaller than that of the longer side wall 12b. Further, the sealing plate 14 is a member for sealing the opening 12h of the exterior body 12, and is a substantially rectangular plate-shaped member in a plan view. The battery case 10 is integrated by joining (e.g., welding joint) the sealing plate 14 to a periphery of the opening 12h of the exterior body 12. The battery case 10 is sealed airtightly (closed tightly).

As shown in FIG. 6, the sealing plate 14 has the injection hole 15, a gas discharge valve 17, and two terminal withdrawal holes 18 and 19. The injection hole 15 is a through hole for pouring an electrolytic solution into the battery case 10 after fixing the sealing plate 14 to the exterior body 12. The injection hole 15 is sealed with the sealing member 16 after pouring of the electrolytic solution. The gas discharge valve 17 is a thin-walled section configured to break when the pressure inside the battery case 10 exceeds a predetermined value to discharge gas inside the battery case 10 to the outside.

As described above, the electrolyte may be accommodated in the battery case 10 along with the wound electrode assembly 20. As the electrolyte, those used in conventionally known batteries can be used without any particular restrictions. As one example, a non-aqueous electrolytic solution can be used in which a supporting salt is dissolved in a non-aqueous solvent. Examples of the non-aqueous solvent include carbonate-based solvents such as ethylene carbonate, dimethyl carbonate, and ethylmethyl carbonate. Examples of the supporting salt include fluorine-containing lithium salts such as LiPF₆. The non-aqueous electrolytic solution may contain various types of additives if needed. It is noted that the electrolyte may be in a solid state (a solid electrolyte) and may be integrated with the electrode assembly.

A positive electrode terminal 30 is attached to one end of the sealing plate 14 in a longitudinal direction Y (the left side in FIG. 5 and FIG. 6). An negative electrode terminal 40 is attached to the other end of the sealing plate 14 in the longitudinal direction Y (the right side in FIG. 5 and FIG. 6). The positive electrode terminal 30 and the negative electrode terminal 40 are inserted into the terminal withdrawal holes 18, 19, and exposed to the outer surface of the sealing plate 14. The positive electrode terminal 30 is electrically connected to a plate-shaped positive electrode external conductive member 32 at the outside of the battery case 10. The negative electrode terminal 40 is electrically connected to a plate-shaped positive electrode external conductive member 42 at the outside of the battery case 10. The positive electrode external conductive member 32 and the negative electrode external conductive member 42 are connected to another rechargeable battery or another external device via an external connection member such as a bus bar. The positive electrode external conductive member 32 and the negative electrode external conductive member 42 are preferably made of a metal having excellent conductivity, for example, aluminum, aluminum alloys, copper, copper alloys, and the like. However, the positive electrode external conductive member 32 and the negative electrode external conductive member 42 are not essential, and can be omitted in other embodiments.

As shown in FIG. 7 to FIG. 9, the battery 100 has a plurality (three) of wound electrode bodies 20 housed in the battery case 10, in this case. The detailed structure of the wound electrode bodies 20 will be described below. Each of the wound electrode bodies 20 has the positive electrode tab group 25 and the negative electrode electrode tab group 27 (see FIG. 8). As shown in FIG. 8, these electrode tab groups (the positive electrode tab group 25 and the negative electrode tab group 27) are bent in a state where the electrode current collectors (the positive electrode current collector 50 and the negative electrode current collector 60) are joined.

The positive electrode tab group 25 of each of the plurality of wound electrode bodies 20 is connected to the positive electrode terminal 30 via the positive electrode current collector 50. The positive electrode current collector 50 is housed in the inside of the battery case 10. The positive electrode current collector 50 comprises the positive electrode first current collecting member 51 and the positive electrode second current collecting member 52 as shown in FIG. 6 and FIG. 9. The positive electrode first current collecting member 51 is a plate-shaped conductive member extending in the longitudinal direction Y along an inner surface of the sealing plate 14. The positive electrode second current collecting member 52 is a plated-shaped conductive member extending along a vertically direction Z of the battery 100. A lower end 30c of the positive electrode terminal 30 is then inserted into the inside of the battery case 10 through the terminal withdrawal hole 18 of the sealing plate 14, and connected to the positive electrode first current collecting member 51 (see FIG. 6). Further, as shown in FIG. 8 to FIG. 10, the battery 100 has a number of positive electrode second current collecting members 52 corresponding to the number of the plurality of wound electrode bodies 20, in this case. Each of the positive electrode second current collecting members 52 are connected to the corresponding positive electrode tab group 25 of the wound electrode bodies 20. Then, as shown in FIG. 8, the positive electrode tab group 25 of the wound electrode bodies 20 is bent so that the positive electrode second current collecting members 52 and the one side surfaces 20e of the wound electrode bodes 20 are facing each other. This electrically connects an upper end of the positive electrode second current collecting member 52 with the positive electrode first current collecting member 51. It is noted that the positive electrode terminal 30 and the positive electrode current collector 50 are preferably composed of a metal with excellent conductivity. The positive electrode terminal 30 and the positive electrode current collector 50 may be made of, for example, aluminum or an aluminum alloy.

Meanwhile, the negative electrode tab group 27 of each of the plurality of wound electrode bodies 20 is connected to the negative electrode terminal 40 via the negative electrode current collector 60. Such a connection structure at an negative electrode side is substantially identical to that of a positive electrode side as described above. Specifically, the negative electrode current collector 60 comprises the negative electrode first current collecting member 61 and the negative electrode second current collecting member 62 as shown in FIG. 6 and FIG. 9. The negative electrode first current collecting member 61 is a plate-shaped conductive member extending in the longitudinal direction Y along the inner surface of the sealing plate 14. The negative electrode second current collecting member 62 is a plated-shaped conductive member extending along the vertically direction Z of the battery 100. A lower end 40c of the negative electrode terminal 40 is then inserted into the inside of the battery case 10 through the terminal withdrawal hole 19, and connected to the negative electrode first current collecting member 61 (see FIG. 6). Further, as shown in FIG. 8 to FIG. 10, the battery 100 has a number of negative electrode second current collecting members 62 corresponding to the number of the plurality of wound electrode bodies 20, in this case. The negative electrode second current collecting members 62 is connected to the negative electrode tab group 27 of the wound electrode bodies 20, respectively. As shown in FIG. 8 and FIG. 9, the negative electrode tab group 27 of the wound electrode bodies 20 is then bent so that the negative electrode second current collecting members 62 and the one side surfaces 20h of the wound electrode bodes 20 are facing each other. This electrically connects an upper end of the negative electrode second current collecting member 62 with the negative electrode first current collecting member 61. It is noted that the negative electrode terminal 40 and the negative electrode current collector 60 are preferably made of a metal with excellent conductivity. The negative electrode terminal 40 and the negative electrode current collector 60 may be made of, for example, copper or a copper alloy.

In the battery 100, various insulating members are installed to prevent conduction between the wound electrode bodies 20 and the battery case 10. For example, as shown in FIG. 5 and FIG. 6, the positive electrode external conductive member 32 and the negative electrode external conductive member 42 are insulated from the sealing plate 14 by external insulating members 92. Further, as shown in FIG. 6, a gasket 90 is fit to each of the terminal withdrawal holes 18, 19 of the sealing plate 14. This can prevent conduction of the positive electrode terminal 30 (or the negative electrode terminal 40) inserted into the terminal withdrawal holes 18, 19 with the sealing plate 14. Further, an inner insulating member 94 is disposed between the positive electrode current collector 50 and the negative electrode current collector 60 and the inner surface side of the sealing plate 14. This can suppress conduction of the positive electrode current collector 50 and the negative electrode current collector 60 with the sealing plate 14. The inner insulating member 94 may comprise a protrusion protruding toward the wound electrode assembly 20. Further, the plurality of wound electrode bodies 20 covered with the electrode assembly holder 29 (see FIG. 7) made of an insulating resin sheet are placed in the inside of the exterior body 12. This can prevent direct contact between the wound electrode bodies 20 and the exterior body 12. It is noted that there is no particular limitation for the material of each of the aforementioned insulating members as long as it has predefined insulating properties. Examples of such a material include polyolefin-based resins such as polypropylene (PP) and polyethylene (PE); and synthetic resin materials such as fluorinated resins, for example, perfluoroalkoxyalkane, polytetrafluoroethylene (PTFE).

In this case, three wound electrode bodies 20 are housed in the exterior body 12. However, there is no particular limitation for the number of wound electrode bodies placed in the inside of one exterior body 12, and may be 4 or more, or even one. The wound electrode assembly 20 is preferably flattened. As shown in FIG. 3, the wound electrode assembly 20, which is, for example, flattened, has a pair of curved portions 20r facing the bottom wall 12a of the exterior body 12 and the sealing plate 14, and a flattened portion 20f connecting the pair of curved portions 20r and facing the longer side wall 12b of the exterior body 12. It is noted that in this specification, a flattened wound electrode assembly refers to a wound electrode assembly that is substantially oval in a cross-sectional view and has a so-called race-track shape (see FIG 3).

As shown in FIG. 11, the wound electrode bodies 20 are stacked in a manner where the strip-shaped positive electrode sheet 22 and the strip-shaped negative electrode sheet 24 are insulated via the strip-shaped first separator 71 and the strip-shaped second separator 72, and configured so as to be wound around the winding axis WL in the longitudinal direction. The wound electrode assembly 20 is placed in the inside the exterior body 12 in an orientation where the winding axis WL (see FIG. 11) is parallel to the longitudinal direction Y of the exterior body 12. In other words, the wound electrode assembly 20 is placed in the inside of the exterior body 12 in an orientation where the winding axis WL is parallel to the bottom wall 12a and is orthogonal to the shorter side wall 12c. An end face of the wound electrode assembly 20 (in other words, a stacked face of the positive electrode sheet 22 and negative electrode sheet 24) faces the shorter side wall 12c.

The positive electrode sheet 22 is a strip-shaped member as shown in FIG. 11. The positive electrode sheet 22 has a strip-shaped positive electrode current collector 22c; and a positive electrode active material layer 22a and a positive electrode protective layer 22p adhered on at least one surface of the positive electrode current collector 22c. However, the positive electrode protective layer 22p is not essential, and can be omitted in other embodiments. For each member of the positive electrode sheet 22, conventionally known materials that can be used in common batteries (e.g., lithium-ion secondary batteries) can be used without any particular restrictions. For example, the positive electrode current collector 22c is preferably made of a conductive metal such as aluminum, aluminum alloys, nickel, stainless steel, and the like. In this case, the positive electrode current collector 22c is a metal foil, specifically an aluminum foil.

In the positive electrode sheet 22, the plurality of positive electrode tabs 22t are provided at one end of the wound electrode assembly 20 in the longitudinal direction Y (a left end in FIG. 11), as shown in FIG. 11. The plurality of positive electrode tabs 22t are provided at predetermined intervals (intermittently) along the longitudinal direction. The positive electrode tabs 22t are connected to the positive electrode sheet 22. In this case, the positive electrode tabs 22t are a part of the positive electrode current collector 22c and made of a metal foil (specifically, an aluminum foil). The positive electrode tabs 22t represent regions where the positive electrode active material layer 22a is not formed, and the positive electrode current collector 22c is exposed. However, the positive electrode tabs 22t may have the positive electrode active material layer 22a and/or the positive electrode protective layer 22p partially formed, and may be a separate member from the positive electrode current collector 22c. In this case, the plurality of positive electrode tabs 22t are each trapezoidal in shape. However, the shape of the positive electrode tabs 22t is not limited to this. Further, there is also no particular limitation for the size of the plurality of positive electrode tabs 22t. The shape and size of the positive electrode tabs 22t can be adjusted accordingly, for example, by considering conditions of connection to the positive electrode current collector 50 and positions of their formation, and the like. As shown in FIG. 8, the plurality of positive electrode tabs 22t are stacked at one end of the positive electrode sheet 22 in the longitudinal direction Y (the left end in FIG. 8) to form the positive electrode tab group 25.

The positive electrode active material layer 22a is provided in a strip manner along the longitudinal direction of the strip-shaped positive electrode current collector 22c, as shown in FIG. 11. The positive electrode active material layer 22a contains a positive electrode active material (e.g., lithium transition metal composite oxides such as lithium nickel cobalt manganese composite oxides) that can reversibly occlude and release charge carriers. The positive electrode active material layer 22a preferably contains a lithium transition metal composite oxide as a positive electrode active material, and the lithium transition metal composite oxide preferably has a high content of nickel (Ni). For example, in the lithium transition metal composite oxide, the content of nickel may preferably be 55 mol% or more, more preferably 70 mol% or more, and even more preferably 75 mol% or more when the total of metal elements other than lithium is 100 mol%. This can achieve an even higher capacity of a non-aqueous electrolyte secondary battery.

When the total solid content of the positive electrode active material layer 22a is 100 mass%, the positive electrode active material may generally account for 80 mass% or more, typically 90 mass% or more, for example, 95 mass% or more. The positive electrode active material layer 22a may contain an optional component, such as conductive materials, binders, and various additive components, other than the positive electrode active material. Examples of conductive materials include carbon materials such as acetylene black (AB). Examples of binders include fluorinated resins such as poly(vinylidene fluoride) (PVdF).

Although not particularly limited, when the weight per unit area of the positive electrode active material layer 22a is a (g) and the amount of moisture generated when the positive electrode active material layer 22a is heated from 150°C to 300°C is b (g), the ratio (b/a) of the amount of moisture b to the weight a is preferably less than 0.2%.

The positive electrode protective layer 22p is a layer configured so as to have lower electrical conductivity than the positive electrode active material layer 22a. The positive electrode protective layer 22p is provided in the longitudinal direction Y at the boundary between the positive electrode current collector 22c and the positive electrode active material layer 22a, as shown in FIG. 11. In this case, the positive electrode protective layer 22p is provided in the longitudinal direction Y at one end of the positive electrode current collector 22c (the left end in FIG. 11). However, the positive electrode protective layer 22p may be provided at the both ends in the longitudinal direction Y The positive electrode protective layer 22p can prevent internal short circuit in the battery 100 due to direct contact between the positive electrode current collector 22c and the negative electrode active material layer 24a in case the first separator 71 and the second separator 72 are damaged.

The positive electrode protective layer 22p contains an insulating inorganic filler, for example, ceramic particles such as alumina. When the total solid content of the positive electrode protective layer 22p is 100 mass%, the inorganic filler may generally account for 50 mass% or more, typically 70 mass% or more, for example, 80 mass% or more. The positive electrode protective layer 22p may contain an optional component, such as conductive materials, binders, and various additive components, other than the inorganic filler. Conductive materials and binders may be the same as those exemplified as can be included in the positive electrode active material layer 22a.

The negative electrode sheet 24 is a strip-shaped member as shown in FIG. 11. The negative electrode sheet 24 has a strip-shaped negative electrode current collector 24c; and the negative electrode active material layer 24a adhered on at least one surface of the negative electrode current collector 24c. For each member of the negative electrode sheet 24, conventionally known materials that can be used in common batteries (e.g., lithium-ion secondary batteries) can be used without any particular restrictions. For example, the negative electrode current collector 24c is preferably made of a conductive metal such as copper, copper alloys, nickel, stainless steel, and the like. In this case, the negative electrode current collector 24c is a metal foil, specifically a copper foil.

In the negative electrode sheet 24, the plurality of negative electrode tabs 24t are provided at one end of the wound electrode assembly 20 in the longitudinal direction Y (a right end in FIG. 11), as shown in FIG. 11. The plurality of negative electrode tabs 24t are provided at predetermined intervals (intermittently) along the longitudinal direction. The negative electrode tabs 24t are connected to the negative electrode sheet 24. In this case, the negative electrode tabs 24t are a part of the negative electrode current collector 24c and made of a metal foil (specifically, an aluminum foil). In this case, the negative electrode tabs 24t represent regions where the negative electrode active material layer 24a is not formed and the negative electrode current collector 24c is exposed. However, the negative electrode tabs 24t may have the negative electrode active material layer 24a partially formed, and may be a separate member from the negative electrode current collector 24c. In this case, the plurality of negative electrode tabs 24t are each trapezoidal in shape. However, the shape and size of the plurality of negative electrode tabs 24t can be suitably adjusted as in the positive electrode tabs 22t. As shown in FIG. 8, the plurality of negative electrode tabs 24t are stacked at one end of the negative electrode sheet 24 in the longitudinal direction Y (the right end in FIG. 8) to form the negative electrode tab group 27.

The negative electrode active material layer 24a is provided in a strip manner along the longitudinal direction of the strip-shaped negative electrode current collector 24c, as shown in FIG. 11. The negative electrode active material layer 24a contains an negative electrode active material (for example, carbon materials such as graphite) that can reversibly occlude and release change carriers. The width of the negative electrode active material layer 24a (the length in the longitudinal direction Y The same shall apply hereinafter.) may be preferably larger than the width of the positive electrode active material layer 22a. When the total solid content of the negative electrode active material layer 24a is 100 mass%, the negative electrode active material may generally account for 80 mass% or more, typically 90 mass% or more, for example, 95 mass% or more. The negative electrode active material layer 24a may contain an optional component, such as conductive materials, binders, dispersing agents, and various additive components, other than the negative electrode active material. Examples of the binders include gums such as styrene-butadiene gum (SBR). Examples of the dispersing agents include celluloses such as carboxymethylcellulose (CMC).

The first separator 71 and the second separator 72 are strip-shaped members. The first separator 71 and the second separator 72 are insulating sheets with a plurality of fine through holes through which charge carriers can pass. The widths of the first separator 71 and the second separator 72 are larger than the width of the negative electrode active material layer 24a. By interposing the first separator 71 and the second separator 72 between the positive electrode sheet 22 and the negative electrode sheet 24, contact between the positive electrode sheet 22 and the negative electrode sheet 24 can be prevented while charge carriers (e.g., lithium ions) are allowed to be transported between the positive electrode sheet 22 and the negative electrode sheet 24.

As a base material layer 85, a microporous membrane used for conventionally known battery separators can be used without any particular restrictions. For example, the base material layer 85 is preferably a porous sheet-shaped member. The base material layer 85 may be of a single-layer structure, or of a structure of two or more layers, for example, of a three-layer structure. The base material layer 85 is preferably composed of polyolefin resin. This ensures sufficient flexibility of the separators, facilitating fabrication (winding and press forming) of the wound electrode assembly 20. Polyolefin resin is preferably polyethylene (PE), polypropylene (PP), or a mixture thereof is preferred, and is more preferably composed of PE. Although not particularly limited, the thickness of the base material layer 85 is preferably 3 µm or more and 25 µm or less, more preferably 3 µm or more and 18 µm or less, and even more preferably 5 µm or more and 14 µm or less.

A heat resistant layer 87 is provided on the base material layer 85 in this case. The heat resistant layer 87 may be provided directly on the surface of the base material layer 85 or on the base material layer 85 via another layer(s). However, the heat resistant layer 87 is not essential, and can be omitted in other embodiments. In this case, the basis weight of the heat resistant layer 87 is homogeneous in the longitudinal and width direction of the separators. Although not particularly limited, the thickness of the heat resistant layer 87 is preferably 0.3 µm or more and 6 µm or less, more preferably 0.5 µm or more and 6 µm or less, and even more preferably 1 µm or more and 4 µm or less.

The heat resistant layer 87 preferably contains an inorganic filler and a heat resistant layer binder. As the inorganic filler, those conventionally known and used for this type of application can be used without any particular restrictions. The inorganic filler preferably contains insulating ceramic particles. Among these, inorganic oxides such as alumina, zirconia, silica, and titania; metal hydroxides such as aluminum hydroxide; and clay minerals such as boehmite are preferred, and alumina and boehmite are more preferred in terms of heat resistance, availability, and the like. Further, compounds containing aluminum are especially preferred in view of suppressing thermal shrinkage of the separators. The percentage of the inorganic filler to the total mass of the heat resistant layer 87 is preferably 80 mass% or more, 90 mass% or more, and even more preferably 95 mass% or more.

As the heat resistant layer binder, those conventionally known and used for this type of application can be used without any particular restrictions. Specific examples include acrylic resins, fluorinated resins, epoxy resins, urethane resins, ethylene vinyl acetate resins, and the like. Among them, acrylic resins are preferred.

FIG. 14 shows a schematic cross sectional view along the XIV-XIV line in FIG. 10. It is noted that for convenience, the illustration of members in a middle part of the wound electrode assembly 20 is omitted in FIG. 14. Further, D1 in the figure indicates a direction of winding, but it is not intended to limit the direction of winding to such a direction. As shown in FIG. 14, the positive electrode sheet 22 and the first separator 71 are bonded via the adhesive layer 81, and the positive electrode sheet 22 and the second separator 72 are bonded via the second adhesive layer 82 in the wound electrode assembly 20. Further, the first separator 71 has a first region (see between A-B in FIG 14) in the vicinity of the winding initiation end 71a of the first separator. In this case, the first adhesive layer 81 is not formed in the first region. Further, the second separator 72 has a second region (see between C-D in FIG 14) in the vicinity of the winding initiation end 72a of the second separator. In this case, the second adhesive layer 82 is not formed in the second region. In the wound electrode assembly 20 of such a configuration, excessive formation of the adhesive layers is suitably suppressed, and thus increased resistance of the battery 100 and decreased impregnability of the wound electrode assembly 20 can be suitably suppressed.

In other embodiments, in the first region, there may exist the region where the first adhesive layer 81 is not formed and/or the region where the first adhesive layer 81 is formed having a basis weight less than that of the first adhesive layer 81 formed at the region facing the positive electrode sheet 22 in the first separator 71. That is, the first adhesive layer 81 may be formed throughout the entire first region, or in the first region, there may exist the region where the first adhesive layer 81 is formed and the region where the first adhesive layer 81 is not formed. Further, in the second region, there may exist the region where the second adhesive layer 82 is not formed and/or the region where the second adhesive layer 82 is formed having a basis weight less than that of the second adhesive layer 82 formed at the region facing the positive electrode sheet 22 in the second separator 72. That is, the second adhesive layer 82 may be formed throughout the entire second region, or in the second region, there may exist the region where the second adhesive layer 82 is formed and the region where the second adhesive layer 82 is not formed. It is noted that for the ratio (B/A) of the basis weight B of the first adhesive layer 81 in the first region to the basis weight A of the first adhesive layer 81 at the region facing the positive electrode sheet 22, see the description in "Method of manufacturing battery." Further, for the ratio (D/C) of the basis weight D of the second adhesive layer 82 in the second region to the basis weight C of the second adhesive layer 82 at the region facing the positive electrode sheet 22, see the description in "Method of manufacturing battery."

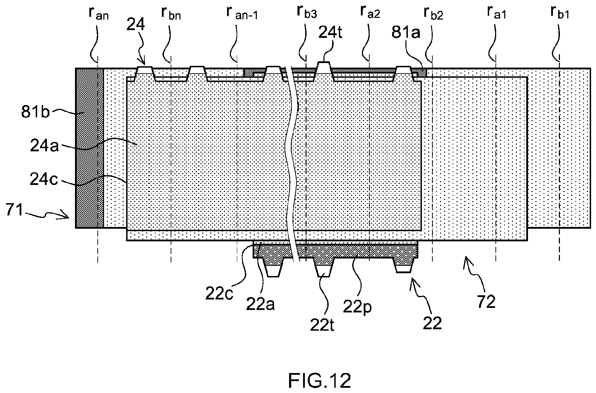

FIG. 12 shows a schematic diagram illustrating the wound electrode assembly 20 in its unfolded state according to the present embodiment. FIG. 13 shows an exploded view of FIG. 12. It is noted that in FIG. 11, each member is shown shifted in the width direction for viewability. Here, rₐ's (rₐ₁, rₐ₂, rₐₙ₋₁, rₐₙ) in the figure correspond to apexes in R portions in one side of the wound electrode assembly 20. Further, r_{b}'s (r_{b1}, r_{b2}, r_{b3}, r_{bn}) in the figure correspond to apexes in R portions in the other side of the wound electrode assembly 20. As shown in FIG. 13, the length L1 from the winding initiation end 71a of the first separator in the direction of winding in the first region is longer than the length L2 from the winding initiation end 72a of the second separator in the direction of winding in the second region. According to such a configuration, excessive formation of the adhesive layers in the separators can be suppressed. This can suppress increased resistance of the battery 100 and decreased impregnation of the wound electrode assembly 20. Therefore, this is preferred. It is noted that for the ratio (L1/L2), see the description in "Method of manufacturing battery."

In the present embodiment, the first adhesive layer is not formed in the first separator 71 at the region corresponding to the outermost surface of the wound electrode assembly 20 (see P in FIG. 14). In the wound electrode assembly 20 of such a configuration, excessive formation of the first adhesive layer 81 is suitably suppressed, and thus increased resistance of the battery 100 and decreased impregnability of the wound electrode assembly 20 can be suitably suppressed.

In other embodiments, at the region corresponding to the outermost surface of the wound electrode assembly 20 in the first separator 71, there may exist the region where the first adhesive layer 81 is not formed and/or the region where the first adhesive layer 81 is formed having a basis weight less than that of the first adhesive layer 81 formed at the region facing the positive electrode sheet 22 in the first separator 71. That is, the first adhesive layer 81 may be formed throughout the entire region corresponding to the outermost surface of the wound electrode assembly 20 in the first separator 71, or the region where the first adhesive layer 81 is formed and the region where the first adhesive layer 81 is not formed may be present in the region corresponding to the outermost surface of the wound electrode assembly 20 in the first separator 71. In this case, for example, when the first adhesive layer 81 is not formed in the region corresponding to the outermost surface of the wound electrode assembly 20 in the first separator 71, a winding end-fixing tape may be applied to the winding termination end 71b of the first separator. As the winding end-fixing tape, those conventional known and used for this type of battery can be used. It is noted that for the ratio (J/I) of the basis weight J of the first adhesive layer 81 in the region corresponding to the outermost surface of the wound electrode assembly 20 to the basis weight I of the first adhesive layer 81 at the region facing the positive electrode sheet 22, see the description in "Method of manufacturing battery."

As shown in FIG. 14, in the present embodiment, the first adhesive layer 81b having a basis weight less than that of the first adhesive layer 81a at the region facing the positive electrode sheet 22 is formed in the vicinity of the winding termination end 71b of the first separator on a surface in a side where the first adhesive layer 81 is formed.

The first adhesive layer 81 and the second adhesive layer 82 are bonded to the positive electrode sheet 22 by, for example, heating or pressing (typically press forming). The first adhesive layer 81 and the second adhesive layer 82 may have a similar configuration or different configurations. The first adhesive layer 81 and the second adhesive layer 82 may be formed at a position facing a surface of the positive electrode active material layer 22a or at a position facing a surface of the positive electrode current collector 22c. Alternatively, they may be formed at a position facing the surface of the positive electrode active material layer 22a and the surface of the positive electrode current collector 22c.

The first adhesive layer 81 and the second adhesive layer 82 contain the adhesive layer binder. As the adhesive layer binder, any conventionally known resin material having a certain adhesiveness to the electrodes can be used without any particular restrictions. Specific examples include acrylic resins, fluorinated resins, epoxy resins, urethane resins, polyamide resins, polyimide resins, polyamideimide resins, polyethylene oxide resins, ethylene vinyl acetate resins, polyamic acid resins, and the like. Among these, fluorinated resins and acrylic resins are preferred because they have high flexibility and can more suitably demonstrate adhesiveness to the electrodes. Fluorinated resins include poly(vinylidene fluoride) (PVdF), polytetrafluoroethylene (PTFE), and the like. Acrylic resins include polyacrylonitrile, polymethylmethacrylate, and the like. The type of the adhesive layer binder may be the same as or different from that of the heat resistant layer binder. The ratio of the adhesive layer binder to the total mass of the adhesive layer may be preferably 25 mass% or more, 50% or more, and more preferably 80 mass% or more. This enables a predetermined adhesiveness to the electrodes to be adequately achieved.

The first adhesive layer 81 and the second adhesive layer 82 may contain an additional material (e.g., inorganic fillers listed as ingredients of the heat resistant layer 73) in addition to the adhesive layer binder. When the adhesive layer contains an inorganic filler, the ratio of the inorganic filler to the total mass of the adhesive layer is preferably 75 mass% or less, more preferably 50% or less, and even more preferably 20% or less. The thicknesses of the first adhesive layer 81 and the second adhesive layer 82 are preferably 0.3 µm or more and 6 µm or less in general, more preferably 0.5 µm or more and 6 µm or less, and even more preferably 1 µm or more and 4 µm or less.

Although not particularly limited, the basis weight of the first adhesive layer 81 and the second adhesive layer 82 is preferably 0.005 to 1.0 g/m², and more preferably 0.02 to 0.06 g/m².

The adhesive layer may be formed throughout the entire surface or in a predetermined pattern. For example, the adhesive layer may have a pattern in a plan view, such as dots, stripes, waves, strips (streaks), dashed lines, or a combination thereof.

The battery 100 can be used for various applications, but can be suitably used as, for example, power sources (drive power sources) for motors installed in vehicles such as passenger cars, trucks, and the like. There is no particular limitation for the types of vehicles, but they include, for example, plug-in hybrid electric vehicles (PHEV), hybrid electric vehicles (HEV), battery electric vehicles (BEV), and the like.

Although some embodiments of the present disclosure are described above, the aforementioned embodiments are provided as merely examples. The present disclosure can be implemented in various other forms. The present disclosure can be implemented based on the contents disclosed in this specification and the common technical knowledge in the field. The claimed technology includes various variations and modifications of the embodiments exemplified above. For example, it is also possible to replace some of the above embodiments with other variant forms, and it is also possible to add other variant forms to the above embodiments. Further, if a technical feature is not described as essential, it can be excluded as appropriate.

For example, in the method of manufacturing a battery as described above, the adhesive layers are formed on the separators, but it is not limited to this. In the method of manufacturing a battery as disclosed herein, the separators can be used in which a desired amount of the adhesive layer are pre-formed in a desired region. In such a case, the first adhesive layer forming step and the second adhesive layer forming step as described above do not need to be performed.

For example, in the method manufacturing of a battery as described above, the first contact region A1 includes the region in contact with the side wall of the first slit Sa and the side surface of the winding core 210 in the first separator 71. However, it is not limited to this. For example, when a winding core having no slit is used, the first contact region may be a region in contact with the side surface of the winding core. For example, in the method manufacturing of a battery as described above, the second contact region A2 includes the region in contact with the side wall of the second slit Sb and the side surface of the winding core 210 in the second separator 72. However, it is not limited to this. For example, when a winding core having no slit is used, the second contact region may be a region in contact with the side surface of the winding core.

For example, the method of manufacturing a battery as described above comprises the pressing step, but it is not limited to this. The method of manufacturing a battery as disclosed herein does not need to comprise the pressing step, when the wound electrode assembly is, for example, cylindrical. The method of manufacturing a battery as disclosed here may comprise a drying step after forming the adhesive layer in the separator with the coating applicator 230. In the wound electrode assembly 20, the percentage of an organic solvent and/or water contained in the adhesive layers (the first adhesive layer 81, the second adhesive layer 82) is preferably 1% or less of the organic solvent and/or water in the adhesive, more preferably 0.1% or less, and particularly preferably 0.01% or less.

For example, in the method of manufacturing a battery as described above, the first adhesive layer 81 is formed at the region facing the positive electrode sheet 22 of the first separator 71, and the second adhesive layer 82 is formed at the region facing the positive electrode sheet 22 of the second separator 72, but it is not limited to this. In the method of manufacturing a battery as disclosed herein, the first adhesive layer 81 may also be formed in a region other than the region facing the positive electrode sheet 22 in the first separator 71, and the second adhesive layer 82 may also be formed in a region other than the region facing the positive electrode sheet 22 in the second separator 72. In the method of manufacturing a battery as disclosed herein, for example, the first adhesive layer 81 may be formed at a region facing the negative electrode sheet 24 in the first separator 71, and the second adhesive layer 82 may be formed at a region facing the negative electrode sheet 24 in the second separator 72. In those cases, the basis weight of the first adhesive layer 81 is preferably less than that of the first adhesive layer 81 at the region facing the positive electrode sheet 22 of the first separator 71, and the basis weight of the second adhesive layer 82 is preferably less than that of the second adhesive layer 82 at the region facing the positive electrode sheet 22 of the second separator 72.

For example, in the battery as described above, the positive electrode tabs 22t protrude from one end of the wound electrode assembly 20 in the direction of the winding axis and the negative electrode tabs 24t protrude from the other end, but it is not limited to this. The wound electrode assembly manufactured by the method of manufacturing a battery as disclosed herein may be configured so that the positive electrode tabs and the negative electrode tabs protrude from one end of the wound electrode assembly in the direction of the winding axis, or may be configured so as not to include electrode tabs.

For example, in the battery as described above, the outermost surface of the wound electrode assembly 20 corresponds to the first separator 71, but it is not limited to this. In the wound electrode assembly manufactured by the method of manufacturing a battery as disclosed herein, the outermost surface may correspond to the second separator, or may correspond to the first separator and the second separator.

As described above, the specific aspects of the technology disclosed herein include those described in each of the following items.

Item 1: A method of manufacturing a battery comprising a wound electrode assembly, the wound electrode assembly having a strip-shaped first separator, a strip-shaped positive electrode sheet, a strip-shaped second separator, and a strip-shaped negative electrode sheet wound around a winding axis in a predetermined winding direction, the positive electrode sheet being bonded with the first separator via a first adhesive layer, and the positive electrode sheet being bonded with the second separator via a second adhesive layer, the method comprising: a first winding step of bringing the first separator and the second separator into contact with a winding core and winding the first separator and the second separator around the winding core; and a second winding step of winding the positive electrode sheet and the negative electrode sheet around the winding core along with the first separator and the second separator, wherein the first separator has a first region in the vicinity of a winding initiation end of the first separator, and in the first region, there exists a region where the first adhesive layer is not formed and/or a region where the first adhesive layer is formed having a basis weight less than that of the first adhesive layer formed at a region facing the positive electrode sheet in the first separator, and wherein the second separator has a second region in the vicinity of a winding initiation end of the second separator, and in the second region, there exists a region where the second adhesive layer is not formed and/or a region where the second adhesive layer is formed having a basis weight less than that of the second adhesive layer formed at a region facing the positive electrode sheet in the second separator.

Item 2: The method of manufacturing a battery according to Item 1, wherein a length L1 from the winding initiation end of the first separator in the winding direction in the first region is longer than a length L2 from the winding initiation end of the second separator in the winding direction in the second region.

Item 3 : The method of manufacturing a battery according to Item 1 or 2, wherein at the first winding step, the first separator has a first contact region in contact with the winding core, and in the first contact region, there exists a region where the first adhesive layer is not formed and/or a region where the first adhesive layer is formed having a basis weight less than that of the first adhesive layer formed at the region facing the positive electrode sheet in the first separator; and the second separator has a second contact region in contact with the winding core, and in the second contact region, there exists a region where the second adhesive layer is not formed and/or a region where the second adhesive layer is formed having a basis weight less than that of the second adhesive layer formed at the region facing the positive electrode sheet in the second separator.

Item 4: The method of manufacturing a battery according to Item 3, wherein the first region extending to a region other than the first contact region is formed in the first separator.

Item 5: The method of manufacturing a battery according to any one of Items 1 to 4, wherein the first separator is fed to the winding core from one side of a vertical line passing through a winding center of the winding core and extending in a vertical direction, and the second separator is fed to the winding core from the other side.

Item 6: The method of manufacturing a battery according to any one of Items 1 to 5, wherein at a region corresponding to an outermost surface of the wound electrode assembly in the first separator and the second separator, there exists a region where a corresponding adhesive layer is not formed and/or a region where a corresponding adhesive layer is formed having a basis weight less than that of the corresponding adhesive layer formed at a region facing the positive electrode sheet in a corresponding separator.

Item 7: The method of manufacturing a battery according to any one of Items 1 to 6, the method comprising a pressing step of pressing, after the second winding step, the first separator, the positive electrode sheet, the second separator, and the negative electrode sheet which have been wound, wherein the positive electrode sheet and the first separator are bonded in the second winding step, and a bond strength of the positive electrode sheet and the first separator after the pressing step is greater than that of the positive electrode sheet and the first separator before the pressing step.

## Claims

1. A method of manufacturing a battery comprising a wound electrode assembly, the wound electrode assembly (20) having a strip-shaped first separator (71), a strip-shaped positive electrode sheet (22), a strip-shaped second separator (72), and a strip-shaped negative electrode sheet (24) wound around a winding axis in a predetermined winding direction, the positive electrode sheet (22) being bonded with the first separator (71) via a first adhesive layer (81), and the positive electrode sheet (22) being bonded with the second separator (72) via a second adhesive layer (82), the method comprising:
a first winding step of bringing the first separator (71) and the second separator (72) into contact with a winding core (210) and winding the first separator (71) and the second separator (72) around the winding core (210); and
a second winding step of winding the positive electrode sheet (22) and the negative electrode sheet (24) around the winding core (210) along with the first separator (71) and the second separator (72),
wherein
the first separator (71) has a first region in the vicinity of a winding initiation end of the first separator (71a),
in the first region, there exists a region where the first adhesive layer (81) is not formed and/or a region where the first adhesive layer (81) is formed having a basis weight less than that of the first adhesive layer (81) formed at a region facing the positive electrode sheet (22) in the first separator (71),
the second separator (72) has a second region in the vicinity of a winding initiation end of the second separator (72a),
in the second region, there exists a region where the second adhesive layer (82) is not formed and/or a region where the second adhesive layer (82) is formed having a basis weight less than that of the second adhesive layer (82) formed at a region facing the positive electrode sheet (22) in the second separator (72).

2. The method of manufacturing a battery according to claim 1, wherein a length L1 from the winding initiation end of the first separator (71a) in the winding direction in the first region is longer than a length L2 from the winding initiation end of the second separator (72a) in the winding direction in the second region.

3. The method of manufacturing a battery according to claim 1 or 2, wherein
at the first winding step,
the first separator (71) has a first contact region in contact with the winding core (210),
in the first contact region, there exists a region where the first adhesive layer (81) is not formed and/or a region where the first adhesive layer (81) is formed having a basis weight less than that of the first adhesive layer (81) formed at a region facing the positive electrode sheet (22) in the first separator (71),
the second separator (72) has a second contact region in contact with the winding core (210),
in the second contact region, there exists a region where the second adhesive layer (82) is not formed and/or a region where the second adhesive layer (82) is formed having a basis weight less than that of the second adhesive layer (82) formed at a region facing the positive electrode sheet (22) in the second separator (72).

4. The method of manufacturing a battery according to claim 3, wherein the first region extending to a region other than the first contact region is formed in the first separator (71).

5. The method of manufacturing a battery according to any one of claims 1 to 4,
wherein the first separator (71) is fed to the winding core (210) from one side of a vertical line passing through a winding center of the winding core and extending in a vertical direction, and
the second separator (72) is fed to the winding core (210) from the other side.

6. The method of manufacturing a battery according to any one of claims 1 to 5, wherein at a region corresponding to an outermost surface of the wound electrode assembly (20) in the first separator (71) and the the second separator (72), there exists a region where a corresponding adhesive layer is not formed and/or a region where a corresponding adhesive layer is formed having a basis weight less than that of the corresponding adhesive layer formed at a region facing the positive electrode sheet (22) in a corresponding separator.

7. The method of manufacturing a battery according to any one of claims 1 to 6, the method comprising, after the second winding step, a pressing step of pressing the first separator (71), the positive electrode sheet (22), the second separator (72), and the negative electrode sheet (24) which have been wound,
wherein the positive electrode sheet (22) and the first separator (71) are bonded in the second winding step, and
a bond strength of the positive electrode sheet (22) and the first separator (71) after the pressing step is greater than that of the positive electrode sheet (22) and the first separator (71) before the pressing step.
